Europäisches Patentamt

European Patent Office

Office européen des brevets

(19)

(11) **EP 0 769 701 B1**

## (12) EUROPÄISCHE PATENTSCHRIFT

(45) Veröffentlichungstag und Bekanntmachung des Hinweises auf die Patenterteilung:
**07.08.2002 Patentblatt 2002/32**

(51) Int Cl.⁷: **G01P 15/00**, G01C 9/08, B60R 21/00

(21) Anmeldenummer: **96116122.1**

(22) Anmeldetag: **09.10.1996**

(54) **Vorrichtung zur Erfassung einer Fahrzeugquerneigung**

Device for detecting lateral inclination of a vehicle

Dispositif de détection de l'inclinaison laterale d'un véhicule

(84) Benannte Vertragsstaaten:
**DE FR GB**

(30) Priorität: **17.10.1995 DE 19538616**

(43) Veröffentlichungstag der Anmeldung:
**23.04.1997 Patentblatt 1997/17**

(73) Patentinhaber: **Continental Teves AG & Co. oHG 60488 Frankfurt (DE)**

(72) Erfinder:
- **Van Meel, Fransciscus 65812 Bad Soden (DE)**
- **Wanke, Peter 60437 Frankfurt am Main (DE)**

(56) Entgegenhaltungen:
**EP-A- 0 744 622        DE-A- 3 736 294**
**DE-A- 4 228 414        DE-A- 4 322 034**

**Beschreibung**

Die vorliegende Erfindung betrifft eine Vorrichtung zur Erfassung einer Fahrzeugquerneigung und/oder einer Fahrzeugquerbeschleunigung gemäß dem Oberbegriff des Anspruchs 1.

Es ist bekannt, die Querbeschleunigung oder auch die Längsbeschleunigung eines Fahrzeugs anhand eines Beschleunigungsmessers zu erfassen. Bei der Erfassung einer Fahrzeugquerbeschleunigung, beispielsweise zur Erkennung einer Kurvenfahrt, ergibt sich jedoch die Schwierigkeit, dass auch dann eine Querbeschleunigung vorliegt, wenn das Fahrzeug sich lediglich auf einer geneigten Fahrbahn befindet. Die Gravitation täuscht dann eine Kurvenfahrt vor.

Es ist außerdem bekannt, eine Fahrzeugneigung anhand eines Neigungssensors zu erfassen, wie es beispielsweise zum Ausfahren von Überrollbügeln im Crash-Fall erforderlich ist. Derartige Neigungssensoren sprechen jedoch nur an, wenn ein bestimmter Neigungswinkel überschritten wird. Das heißt, derartige Neigungssensoren geben lediglich ein qualitatives, aber kein quantitatives Signal.

Darüber hinaus sind Sensoranordnungen bekannt, die zwei Beschleunigungssensoren aufweisen (DE 43 22 034 A1, DE 37 36 294 A1 sowie EP 0 744 622 A1, dessen Inhalt jedoch unter Artikel 54(3) EPÜ fällt).

Die Aufgabe der vorliegenden Erfindung besteht darin, eine Vorrichtung der eingangs genannten Art zu schaffen, welche eine zuverlässige Bestimmung der Fahrzeugquerneigung und/oder der Fahrzeugquerbeschleunigung erlaubt, um beispielsweise ein sicheres Erkennen einer Kurvenfahrt möglich zu machen.

Diese Aufgabe wird gelöst in Verbindung mit den kennzeichnenden Merkmalen des Anspruchs 1. Das Prinzip der vorliegenden Erfindung besteht also darin, daß Beschleunigungssensoren paarweise im Fahrzeug derart angeordnet werden, daß sie jeweils denselben Neigungswinkel zur Horizontalebene einnehmen, der erste aufwärts, der zweite abwärts. Solange das Fahrzeug nicht geneigt ist, sind die Winkel der Beschleunigungssensoren zur Horizontalebene gleich. Ohne Kurvenfahrt und Fahrzeugneigung geben die Beschleunigungsmesser also Signale ab, welche entgegengesetzter Beschleunigung gleichen Betrages entsprechen, gemäß der auf sie einwirkenden Gravitationskomponente.

Bei einer auftretenden Fahrzeugneigung unterscheiden sich die zur Horizontalen eingenommenen Winkel. Die Signale der beiden Beschleunigungssensoren entsprechen nun unterschiedlichen Beschleunigungen, weil sich die auf die Sensoren einwirkenden Gravitationskomponenten ändern: Ein Winkel wird kleiner, der andere wird größer.

Eine Fahrzeugbeschleunigung hingegen wirkt auf beide Beschleunigungssensoren gleichgerichtet, so daß sich Fahrzeugneigung und -beschleunigung leicht voneinander unterscheiden lassen. Die Erfindung läßt sich auf diese Weise dazu verwenden, eine Kurvenfahrt sicher zu erkennen.

Eine nähere Erläuterung des Erfindungsgedankens erfolgt nun anhand der Beschreibung eines Ausführungsbeispiels mit einer Darstellung in zwei Figuren. Es zeigt:

Fig. 1    eine Sensoranordnung zur Erfassung einer Querbeschleunigung ohne Fahrzeugneigung,

Fig. 2:    eine Sensoranordnung zur Erfassung einer Querbeschleunigung bei geneigtem Fahrzeug.

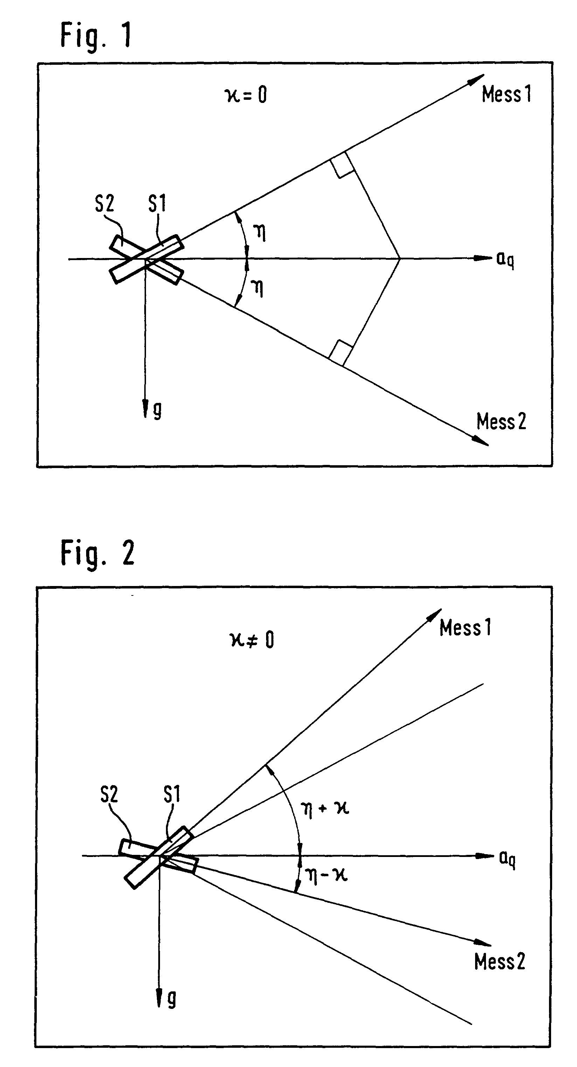

Die Fig. 1 und 2 zeigen eine Sensoranordnung, bestehend aus zwei Beschleunigungssensoren S1 und S2, die zur Bestimmung einer Querbeschleunigung $a_q$ ausgerichtet sind. Die Längsachse des Fahrzeugs, dessen Querbeschleunigung bzw. -neigung bestimmt werden soll, verläuft senkrecht zur Bildebene. Die Erdbeschleunigung (Gravitation) g ist vertikal eingezeichnet.

In Fig. 1 liegt keine seitliche Fahrzeugneigung vor. Dementsprechend nehmen die Beschleunigungssensoren S1 und S2 jeweils denselben Winkel zur Horizontalebene ein, die in der Bildebene durch den Pfeil der Querbeschleunigung $a_q$ dargestellt ist. Der Neigungswinkel $\kappa$ des Fahrzeugs ist gleich 0, so daß sich folgende Gleichungen ergeben:

$$(1) \qquad Mess1 = a_q * \cos\eta - g * \sin\eta$$

$$(2) \qquad Mess2 = a_q * \cos\eta + g * \sin\eta$$

Die gemessenen Beschleunigungen unterscheiden sich also um eine betragsmäßig gleiche Gravitationskomponente ($g * \sin\eta$) entgegengesetzten Vorzeichens.

Liegt eine Fahrzeugquerneigung vor, so ergibt sich das Bild gemäß Fig. 2. Die von den Beschleunigungssensoren S1 und S2 bezüglich der Horizontalebene eingenommenen Winkel sind nicht mehr gleich. Der nach oben gerichtete Beschleunigungssensor S1 nimmt einen größeren Winkel ($\eta+\kappa$) zur Horizontalen ein, während der abwärtsgerichtete Beschleunigungssensor S2 zur Horizontalebene einen kleineren Winkel ($\eta-\kappa$) aufweist. Bei Vorliegen einer Fahrzeugquerneigung ergeben sich also abweichende Gleichungen:

$$(3) \qquad \text{Mess1} = a_q * \cos(\eta + \kappa) - g * \sin(\eta + \kappa)$$

$$(4) \qquad \text{Mess2} = a_q * \cos(\eta - \kappa) + g * \sin(\eta - \kappa)$$

Diese Gleichungen 3 und 4 können nach den Additionstheoremen wie folgt umgewandelt werden:

$$(5) \qquad \text{Mess1} = a_q * (\cos\eta \, \cos\kappa - \sin\eta \, \sin\kappa) - g * (\sin\eta \, \cos\kappa + \cos\eta \, \sin\kappa)$$

$$(6) \qquad \text{Mess2} = a_q * (\cos\eta \, \cos\kappa + \sin\eta \, \sin\kappa) + g * (\sin\eta \, \cos\kappa - \cos\eta \, \sin\kappa)$$

Für kleine Winkel folgt unter der Annahme, daß $\cos \eta = 1$ und $\sin \eta = \eta$:

$$(7) \qquad \text{Mess1} = a_q * (\cos\kappa - \eta \, \sin\kappa) - g * (\eta \, \cos\kappa + \sin\kappa)$$

$$(8) \qquad \text{Mess2} = a_q * (\cos\kappa + \eta \, \sin\kappa) + g * (\eta \, \cos\kappa - \sin\kappa)$$

Durch Addition bzw. Subtraktion der beiden Beschleunigungssignale Mess1 und Mess2 der Beschleunigungssensoren S1 bzw. S2 ergibt sich:

$$(9) \qquad \Sigma = \text{Mess1} + \text{Mess2} = 2a_q * \cos\kappa - 2g * \sin\kappa$$

$$(10) \qquad \Delta = \text{Mess2} - \text{Mess1} = 2a_q * \eta \, \sin\kappa + 2g * \eta \cos\kappa$$

Umformung von Gleichung 9 ergibt:

$$(11) \qquad \frac{\Sigma}{2g} = \frac{a_q}{g} * \cos\kappa - \sin\kappa \Leftrightarrow \frac{a_q}{g} = \frac{\dfrac{\Sigma}{2g} + \sin\kappa}{\cos\kappa}$$

Durch Umformung von Gleichung 10 und Einfügen von Gleichung 9 erhält man:

$$(12) \qquad \frac{\Delta}{2g\eta} = \frac{a_q}{g} * \sin\kappa + \cos\kappa$$

$$\Leftrightarrow \frac{\Delta}{2g\eta} = \frac{\dfrac{\Sigma}{2g} + \sin\kappa}{\cos\kappa} * \sin\kappa + \cos\kappa$$

Indem man Gleichung 12 nach $\kappa$ auflöst, erhält man:

$$(13) \qquad \kappa = 2 \, \text{atan} \left[ \frac{1}{\dfrac{\Delta}{2g\eta} + 1} * \left( -\frac{\Sigma}{2g} + \sqrt{\left(\frac{\Sigma}{2g}\right)^2 - 1 + \left(\frac{\Delta}{2g\eta}\right)^2} \right) \right]$$

Aufgrund des so erhaltenen Wertes der Fahrzeugquerneigung läßt sich durch Einsetzen von κ in eine der vorhergehenden Gleichungen die zugehörige tatsächlich vorliegende Fahrzeugquerbeschleunigung errechnen, bereinigt von einer Fahrzeugquerneigung. Selbstverständlich läßt sich auch die Fahrzeugquerbeschleunigung sofort berechnen, indem man κ eliminiert. Dann läßt sich wiederum anhand der Fahrzeugquerbeschleunigung und der einzelnen Meßsignale der Neigungswinkel κ bestimmen.

Die Verfügbarkeit derartiger offsetkorrigierter Beschleunigungen bzw. die Erkennung von Fahrbahnquerneigungen bietet eine Möglichkeit, die Regelgüte von Systemen zur Erhöhung der Fahrstabilität erheblich zu verbessern. Eine Erkennung einer Kurvenfahrt wird zuverlässiger. Ein Bremseneingriff zur Giermomentenregelung könnte als Regelgröße den Schwimmwinkel des Fahrzeugs heranziehen, da keine Verfälschung des Querbeschleunigungssignals mehr vorliegt und daher der Schwimmwinkel anhand des Lenkwinkels, der Fahrzeuggeschwindigkeit und der Fahrzeugquerbeschleunigung zuverlässig bestimmt werden kann.

Entscheidend ist dabei jeweils, daß beide Beschleunigungssensoren denselben Winkel zur Horizontalebene aufweisen.

## Patentansprüche

**1.**   Vorrichtung zur Erfassung einer Fahrzeugquerneigung (K) und/oder einer Fahrzeugquerbeschleunigung ($a_q$), mit einer Sensoranordnung (S1, S2), die zwei Beschleunigungssensoren aufweist und einer Auswerteeinheit, wobei die beiden Beschleunigungssensoren (S1, S2) parallel zu einer sich in Querrichtung des Fahrzeugs erstreckenden Vertikalebene angeordnet sind und von denen der erste (S1) bezüglich der Horizontalebene ($a_q$) um denselben von 0 verschiedenen Winkel ($\eta$) nach oben geneigt ist, wie der zweite (S2) nach unten geneigt ist, und wobei die Auswerteeinheit anhand der gemessenen unterschiedlichen Querbeschleunigungen die Querneigung (K) und/oder die Querbeschleunigung ($a_q$) des Fahrzeugs errechnet.

**2.**   Vorrichtung nach Anspruch 1, **dadurch gekennzeichnet, dass** die Berechnung der Fahrzeugquerneigung K nach der Beziehung

$$\kappa = 2a\tan\left[\frac{1}{\frac{\Delta}{2g\eta}+1}*\left(-\frac{\Sigma}{2g}+\sqrt{(\frac{\Sigma}{2g})^2-1+(\frac{\Delta}{2g\eta})^2}\right)\right]$$

erfolgte, wobei $\eta$ der Neigungswinkel der Beschleunigungs = sensoren ist, und $\Sigma$ und $\Delta$ die Summe bzw. die Differenz der Beschleunigungssignale darstellt.

## Claims

**1.**   Device for determining a vehicle transverse inclination (K) and/or a vehicle transverse acceleration ($a_q$), with a sensor assembly (S1, S2) including two acceleration sensors, and an evaluation unit, wherein the two acceleration sensors (S1, S2) are arranged in parallel to a vertical plane which extends in a transverse direction of the vehicle, and the first sensor (S1) of the said sensors, with respect to the horizontal plane ($a_q$), is inclined upwards by the same angle ($\eta$) different from 0 as the second sensor (S2) is inclined downwards, and wherein the evaluation unit calculates the transverse inclination (K) and/or the transverse acceleration ($a_q$) of the vehicle on the basis of the different accelerations measured.

**2.**   Device as claimed in claim 1,
**characterized in that** the vehicle transverse inclination K is calculated according to the relation

$$\kappa = 2a\tan\left[\frac{1}{\frac{\Delta}{2g\eta}+1}*\left(-\frac{\Sigma}{2g}+\sqrt{(\frac{\Sigma}{2g})^2-1+(\frac{\Delta}{2g\eta})^2}\right)\right]$$

wherein $\eta$ is the angle of inclination of the acceleration sensors, and $\Sigma$ and $\Delta$ represents the sum of, or the difference between, the acceleration signals.

## Revendications

1. Dispositif pour détecter une inclinaison transversale (K) d'un véhicule et/ou une accélération transversale ($a_q$) d'un véhicule, comportant un ensemble de capteurs (S1, S2) qui comportent deux capteurs d'accélération et une unité d'exploitation, dans lequel les deux capteurs d'accélération (S1, S2) sont disposés parallèlement à un plan vertical s'étendant dans la direction transversale du véhicule, et dont le premier (S1) est incliné vers le haut, par rapport au plan horizontal ($a_q$), du même angle ($\eta$), différent de 0, que celui suivant lequel le deuxième (S2) est incliné vers le bas, et dans lequel l'unité d'exploitation calcule, à l'aide des différentes accélérations mesurées, l'inclinaison transversale K et/ou l'accélération transversale ($a_q$) du véhicule.

2. Dispositif selon la revendication 1, **caractérisé en ce que** le calcul de l'inclinaison transversale K du véhicule s'effectue selon la relation

$$\kappa = 2a\tan\left[\frac{1}{\frac{\Delta}{2g\eta}+1} * \left(-\frac{\Sigma}{2g} + \sqrt{\left(\frac{\Sigma}{2g}\right)^2 - 1 + \left(\frac{\Delta}{2g\eta}\right)^2}\right)\right]$$

$\eta$ étant l'angle d'inclinaison des capteurs d'accélération, et $\Sigma$ et $\Delta$ représentant la somme et la différence des signaux d'accélération.

Fig. 1

Fig. 2